Europäisches Patentamt

European Patent Office

Office européen des brevets

(19)

(11) **EP 0 872 975 A2**

(12) **EUROPEAN PATENT APPLICATION**

(43) Date of publication:
**21.10.1998 Bulletin 1998/43**

(51) Int Cl.[6]: **H04L 9/00**, H04L 9/12

(21) Application number: **98830173.5**

(22) Date of filing: **24.03.1998**

(84) Designated Contracting States:
**AT BE CH DE DK ES FI FR GB GR IE IT LI LU MC NL PT SE**
Designated Extension States:
**AL LT LV MK RO SI**

(30) Priority: **28.03.1997 IT FI970064**

(71) Applicant: **ISTITUTO NAZIONALE DI OTTICA 50125 Arcetri (Firenze) (IT)**

(72) Inventors:
• **Boccaletti, Stefano
Firenze (IT)**

• **Farini, Alessandro
Firenze (IT)**
• **Arecchi, Fortunato, Tito
Firenze (IT)**

(74) Representative:
**Mannucci, Gianfranco, Dott.-Ing. et al
Ufficio Tecnico Ing. A. Mannucci
Via della Scala 4
50123 Firenze (IT)**

(54) **Method for the adaptive synchronization of chaotic systems and data transmission system using said method**

(57)    A method for the transmission of information from a transmitter (1) to a receiver (3) is described, in which the transmitter and the receiver each comprise a dynamic system [$\dot{X}_1 = f(X_1, \mu)$; $\dot{X}_3 = f(X_3, \mu)$], said two systems being able to be synchronized with each other; a signal ($y_3$) relating to one of the variables of one of said systems is exchanged between said two dynamic systems; and the information to be transmitted is coded in the form of a disturbance in one of the variables of the system of the transmitter. Characteristically the transmitter comprises: a first and a second dynamic system [$\dot{X}_1 = f(X_1, CL)$; $\dot{X}_2 = f(X_2 r CL)$] described by identical equations; the receiver (3) transmits to the transmitter (1) a signal ($y_3$) relating to one of the variables of the dynamic system of the receiver, which signal replaces the corresponding variable ($y_2$) of the second dynamic system of the transmitter in order to synchronize the second dynamic system of the transmitter with the dynamic system of the receiver; the transmitter (1) sends to the receiver (3) a signal (U(t)) which is a function of the difference between two corresponding variables ($x_1$(t), $x_2$(t)) of the first and the second dynamic system of the transmitter; the signal ($y_3$) which the receiver sends to the transmitter (1) is interrupted for interruption time intervals (To) greater than a decorrelation time of the dynamic systems of the transmitter and the receiver.

FIG.1

$$\dot{x}_1 = \sigma(y_1 - x_1)$$
$$\dot{y}_1 = rx_1 - y_1 - x_1 z_1$$
$$\dot{z}_1 = -bz_1 + x_1 y_1$$

1A

1B

$$\dot{x}_2 = \sigma(y_3 - x_2)$$
$$\dot{y}_2 = rx_2 - y_2 - x_2 z_2$$
$$\dot{z}_2 = -bz_2 + x_2 y_3$$

u

$y_3$

3

$$\dot{x}_3 = \sigma(y_3 - x_3) + u$$
$$\dot{y}_3 = rx_3 - y_3 - x_3 z_3$$
$$\dot{z}_3 = -bz_3 + x_3 y_3$$

## Description

Technical Field

The present invention relates to a new method for the synchronization of so-called chaotic dynamic systems, which is applicable to the transmission of data in protected conditions.

The need for security and confidentiality during data transmission is a problem of growing importance on account of the rapid growth of information technology and communications systems. For a discussion of the problem refer to T. Beth, "Confidential Communication on the Internet", Sci. Am., December 1995, page 70 et seq.

State of the Art

The idea of synchronizing two identical chaotic dynamic systems which start from different surrounding conditions, i.e. different initial conditions, has already been considered in L.M. Pecora, T.L. Carrols, "Synchronization of Chaotic Systems", Phys. Rev. Lett., Vol. 64, No. 64, 821, 1990, pages 821-824.

A chaotic dynamic system can be represented with a number N of differential equations in N time variables (with $N \geq 3$) associated with one another by means of non-linear functions. L.M. Pecora and T.L. Carrols have shown that, if one has two dynamic systems which can be described with two series of identical equations and said systems satisfy given conditions, they may be synchronized, that is, they may be made to evolve temporally in a substantially identical manner, by transmitting only one of the variables of a system (transmitter) to the other system (receiver). It has been shown by Pecora and Carrols that the two systems may be synchronized when all the Lyapunov exponents of the subsystem to be synchronized are negative. For a more detailed analysis of the theory, reference should be made to the publication mentioned.

The possibility of synchronizing two chaotic systems which start from different initial conditions led to the idea of coding a message within the dynamics of a chaotic system by means of the insertion of small disturbances in a control parameter of the system. A method of this type is described in S. Hayes, C. Grebogi, E. Ott, A. Mark, "Experimental Control of Chaos for Communication", in Phys. Rev. Lett., Vol. 73, N. 13, 1994, page 1781 et seq. Basically the idea consists in implementing two chaotic dynamic systems (which can be described using the same N-dimensional system of equations) in the form of electronic circuits, one of which forms the transmitter and the other the receiver. A signal may be transmitted between the two circuits, said signal consisting of a variable of the system, so as to sychronize the two systems. Within the transmitter system a disturbance of the control parameter generates a data sequence (representing any type of information, including vocal information), which can then be read by a receiver. In fact, the disturbance causes forcing of the dynamics of the transmitter system so as to follow a given dynamic sequence in which the message is coded. The transmission of a variable, in accordance with that already known from Pecora and Carrols, allows synchronization of the receiver and therefore reading of the message by the latter.

The transmission method, moreover, poses a series of problems. In particular it has been shown that it does not guarantee security during transmission of the data. In fact, the transmitter must transmit to the receiver at least one of the system variables in order to obtain synchronization of the two chaotic systems. By intercepting the transmission it thus becomes possible to reconstruct the entire dynamics of the systems and therefore decode the message contained in the systems variable transmitted from the transmitter to the receiver.

In order to avoid this, it has been suggested to use chaos to hide the message in such a way that the signal transmitted from the transmitter to the receiver is formed by the sum of a chaotic signal and the message. The latter may be reconstructed by the receiver once it has been synchronized with the transmitter. This method is described by K.M. Cuomo, A.V. Oppenheim, "Circuit Implementation of Synchronized Chaos with Applications to Communication", in Phys. Rev. Lett., Vol. 71, No. 1, 1993, page 65 et seq., in which an implementation in the form of an electronic circuit of a dynamic Lorenz system is illustrated, said system constituting one of the possible dynamic systems characterized by the possibility of synchronization.

However, this method also does not guarantee an adequate level of security during the transmission of data since it has been demonstrated (c.f. G. Perez, H.A. Cerdeira, "Extracting Messages Masked by Chaos", in Phys. Rev. Lett., Vol. 74, No. 11, 1995, page 1970 et seq.) that the messages masked by low-dimension chaotic processes, once intercepted, may be extracted. In order to overcome this drawback it has been suggested to use chaotic systems with a high number of dimensions (c.f. J.H. Peng, E.J. Ding, M. Ding, W. Yang, "Synchronizing Hyperchaos with a Scalar Transmitted Signal", in Phys. Rev. Lett., Vol. 76, No. 6, 1996, page 904 et seq.), in which the greater degree of randomness and unpredictability is able to increase the security during the transmission. However, in this case also, the possibility of reconstructing the signal from the intercepted parameter cannot be entirely prevented.

Other problems of the traditional systems consist in limitation of the synchronization procedure, i.e. in the fact that synchronization is effective only if the subsystem to be synchronized has negative Lyapunov exponents. Therefore any signal added to mask or hide the message must cause an infinitesimal disturbance of the signal itself and will have the same effect as noise during the transmission.

Other improvements to Pecora and Carrols' system mentioned above have been studied and published (see for example T.C. Newell et al., "Synchronization of Chaotic Diode Resonators by Occasional Proportional Feedback", in Phys. Rev. Lett., Vol. 72, No. 11, 1994, page 1647 et seq.; N. Gershenfeld, G. Grinstein, "Entrainment and Communication with Dissipative Pseudorandom Dynamics", in Phys. Rev. Lett., Vol. 74, No. 25, 1995, page 5024 et seq.; Lj. Kocarev, U. Parlitz, "General Approach for Chaotic Synchronization with Applications to Communication", in Phys. Rev. Lett., Vol. 74, No. 25 1995, page 5028 et seq.; M. Ding, E. Ott, "Enhancing Synchronism of Chaotic Systems", in Phys. Rev, Vol. E 49, 1994, page R945 et seq.

However, the problem of security during the transmission of data has not been resolved in a satisfactory manner.

## Objects and Summary of the Invention

The object of the present invention is that of proposing a method for the adaptive synchronization of chaotic systems particularly suitable for the transmission of data in protected conditions, which allows reconstruction of any intercepted data to be avoided, with a level of security which cannot be achieved by conventional systems.

Substantially, the invention provides a method for the transmission of information from a transmitter to a receiver, in which the transmitter and the receiver each comprise a dynamic system, in which the two systems can be synchronized with each other and a signal relating to one of the variables of one of said systems is exchanged between them and in which the information to be transmitted is coded in the form of a disturbance in one of the variables of the system of the transmitter. Characteristically, according to the invention:

- the transmitter comprises a first and a second dynamic system described by identical equations;
- the receiver transmits to the transmitter a signal relating to one of the variables of the dynamic system of the receiver, which signal replaces the corresponding variable of the second dynamic system of the transmitter in order to synchronize the second dynamic system of the transmitter with the dynamic system of the receiver;
- the transmitter sends to the receiver a signal which is a function of the difference between two corresponding variables of the first and the second dynamic system of the transmitter;
- the signal which the receiver sends to the transmitter is interrupted for interruption time intervals greater than a decorrelation time of the dynamic systems of the transmitter and the receiver, during said interruption intervals the dynamic system of the receiver and the second dynamic system of the transmitter evolving separately with respect to one another.

Basically, therefore, according to the invention, the transmitter and the receiver are connected to one another with two forms of feedback. This ensures greater security during transmission of the information from the transmitter to the receiver, without the possibility of decoding. In fact, the signal which contains the information transmitted from the transmitter to the receiver is a signal which disappears as soon as the first dynamic system of the transmitter has been synchronized with the dynamic system of the receiver. Moreover, the presence of a dual feedback allows interruption, for sufficiently long time intervals, of the signal transmitted from the receiver to the transmitter, from which (if it were not interrupted) it would be possible to reconstruct the dynamic system and therefore decode the signal transmitted from the transmitter to the receiver.

If a degree of accuracy in transmission of the information is determined beforehand and if interruption of the signal sent from the receiver to the transmitter is performed each time the transmission between the transmitter and the receiver reaches said degree of accuracy, transmission of the information is performed in a sufficiently precise manner, making it impossible to reconstruct the dynamics of the systems even through capture and analysis of the (interrupted) signal which the receiver sends to the transmitter.

Using a particular iterative algorithm for determining the time interval between two successive readings at which the transmitter determines the difference between said two variables of the first and second dynamic system, it is possible to make the signal sent from the transmitter to the receiver variable and dependent on the dynamics of the system. Since any person intercepting the signal does not have means for reconstructing the dynamics of the system, he/she is unable to reconstruct the information contained in the signal sent from the transmitter to the receiver.

Further characteristic advantages of the method and the device according to the invention are indicated in the accompanying claims.

## Brief Description of the Drawings

The invention will be better understood with reference to the description and the accompanying drawing, on the basis of which a practical non-limiting example of the invention is illustrated. In the drawing:

Fig. 1 shows a diagram of the system according to the invention;

Fig. 2 shows the time evolution of the parameter which defines the degree of synchronization of the two chaotic systems of the transmitter and the receiver;

Fig. 3 shows the time evolution of the same parameter for a predetermined value of the degree of accuracy required during transmission of the data;

Fig. 4 shows the time pattern of the synchronization signal which the receiver sends to the transmitter; and

Fig. 5 shows the time pattern of the signal sent from the transmitter to the receiver.

Detailed Description of the Preferred Embodiment

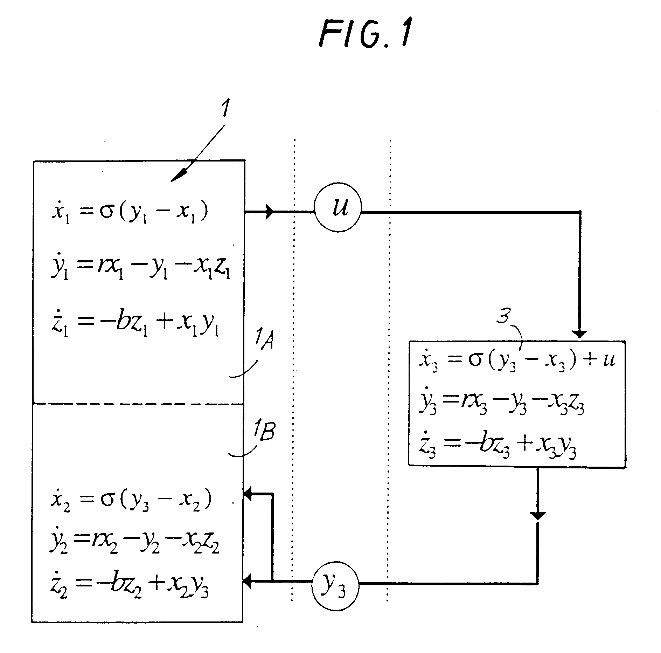

Fig. 1 shows in schematic form a generic transmitter 1 and a generic receiver 3 which may in practice be transmitting and receiving stations of any type, for example two mobile phones, two fax machines, two electronic processors or any other pair of devices designed to transmit to one another data by means of any kind of transmission medium (via cable, optical fibre, radio or the like). The concept on which the invention is based, in fact, may be applied generally to any type of transmission.

The transmitter 1 consists of two identical chaotic dynamic systems, which can be represented mathematically by the following functions:

$$\dot{X}_1 = f(X_1, \mu)$$

$$\dot{X}_2 = f(X_2, \mu) \tag{1}$$

where $\mu$ represents a series of control parameters selected so as to be able to generate chaos, $X_1$, $X_2$ are two vectors of dimension D (with $D \geq 3$) and $f$ is a non-linear function. The receiver 3 consists of an identical system represented mathematically by the differential equation:

$$\dot{X}_3 = f(X_3, \mu) \tag{2}$$

The three systems $X_1$, $X_2$ and $X_3$ start from three different initial situations following non-synchronized dynamics. The vectors $X_1$, $X_2$, $X_3$ may represent different systems. Below the three systems $X_i$ will be represented as dynamic Lorenz systems. In this case the vectors $X_j \equiv (x_j, y_j, z_j)$ with j = 1, 2, 3 follow the following equations:

$$\dot{x}_j = \sigma(y_j - x_j)$$
$$\dot{y}_j = rx_j - y_j - x_j z_j \tag{3}$$
$$\dot{z}_j = -bz_j + x_j y_j$$

The message which the transmitter 1 must transmit to the receiver 3 is coded in the variable $x_1(t)$. The diagram for the transmission is shown in Fig. 1.

The transmission is performed as follows. Firstly the systems $X_2$ and $X_3$ must be synchronized. For this purpose the receiver 3 sends to the transmitter 1 the variable $y_3(t)$ which replaces the variable $y_2$ in the equations $x_2$ and $z_2$. Synchronization is ensured by the fact that the Lyapunov exponents of the subsystem $(x_2, z_2)$ are both negative (for $\sigma = 10$, b = 8/3 and r = 60, the exponents are -2.67 and -9.99 respectively).

At this point the transmitter 1 knows the current dynamic state of the dynamic system of the receiver 3 and consequently is able to transmit to the receiver 3 a disturbance U(t) to be applied to the equation $x_3$ as follows $\dot{x}_3 = \sigma(y_3 - x_3) + U(t)$

in order to synchronize the systems $X_1$ and $X_3$. In the example described here the transmitter 1 uses, in order to determine the disturbance U(t), an adaptive method for controlling and recognizing chaos, described in S. Boccaletti, F.T. Arecchi, "Adaptive Control of Chaos", in Europhys. Lett., Vol. 31, 1995, page 127 et seq. and in F.T. Arecchi, G. Basti, S. Boccaletti, A.L. Perrone, "Adaptive Recognition of a Chaotic Dynamics", in Europhys. Lett., Vol. 26, 1994, page 327 et seq. (The contents of these publications are incorporated in the present description). This method is able to make a given system follow predetermined dynamics. In the present case, the system to be controlled is the system

$X_3$, which must follow the dynamics of the system $X_1$. At each time interval $t_{n+1} = t_n + \tau_n$ (where $\tau_n$ is the adaptive observation time interval which is defined by the iterative algorithm given below), the transmitter defines the difference between the actual dynamics and that to be achieved

$$\delta_{n+1} = x_2(t_{n+1}) - x_1(t_{n+1}) \tag{4}$$

and its local speed of variation compared to $\tau_n$

$$\lambda_{n+1} = 1/\tau_n \{ \mathrm{Log} | (\delta_{n+1}/\delta_n)| \} \tag{5}$$

Then the transmitter updates the value of the observation time interval according to the formula

$$\tau_{n+1} = \tau_n [1 - \tanh (g\lambda_{n+1})] \tag{6}$$

where g is a constant which is always positive and represents the sensitivity of the algorithm and is limited so as to be able to prevent $\tau_{n+1}$ from assuming the value zero.

After this has been done, the transmitter determines the time instant $t_{n+2}$ when the difference 6 is to be observed next; this time instant is defined by

$$t_{n+2} = t_{n+1} + \tau_{n+1}$$

and therefore depends on the speed in variation of the difference $\delta$ (see Formula 6). In this way, starting from a given value $\tau_o = \tau(t=0)$ and a given value $\delta_o = \delta(t=0)$, the transmitter obtains a sequence of observation time intervals which minimizes the variations between the present dynamics and that sought after. The analysis of this sequence results in extraction of the main characteristics of the dynamics.

The signal which the transmitter 1 sends to the receiver 3 is therefore

$$U(t) = (K/\tau_{n+1}) [x_1(t) - x_2(t)] \tag{7}$$

(with K>0) which is added to the equation of evolution $x_3$

$$\dot{x}_3 = \sigma(y_3 - x_3) + U(t)$$

The variable U(t) is the result of two factors. The difference $[x_1(t) - x_2(t)]$ is a continuous function of the time, while the factor $K/(\tau_{n+1})$ is updated at discrete time intervals by means of the iterative algorithm described above.

From the equation (5) it can be seen that the value of $\lambda$ measures locally the evolution of separation of the orbit of the system $X_2$ from that of the system $X_1$. In fact, a negative value of $\lambda$ indicates that the trajectory of the receiver system is locally collapsing into the desired trajectory (i.e. it is becoming synchronized with the dynamic system of the transmitter), while if $\lambda$ is positive, this implies that the trajectory is locally diverging from the desired trajectory and therefore that the two systems are not converging. Therefore the expansion or contraction of $\tau$ reflects the need to disturb in a more or less energetic manner the receiver system so as to force it to follow the desired dynamics.

As can be understood from the iterative algorithm defined above, the method introduces an adaptive time scale, in which the same adaptive dynamics select the correction term to be added to the evolutive equation $x_3$. In fact, U(t) is inversely proportional to the time intervals and is therefore weighted with the information extracted by the dynamics itself.

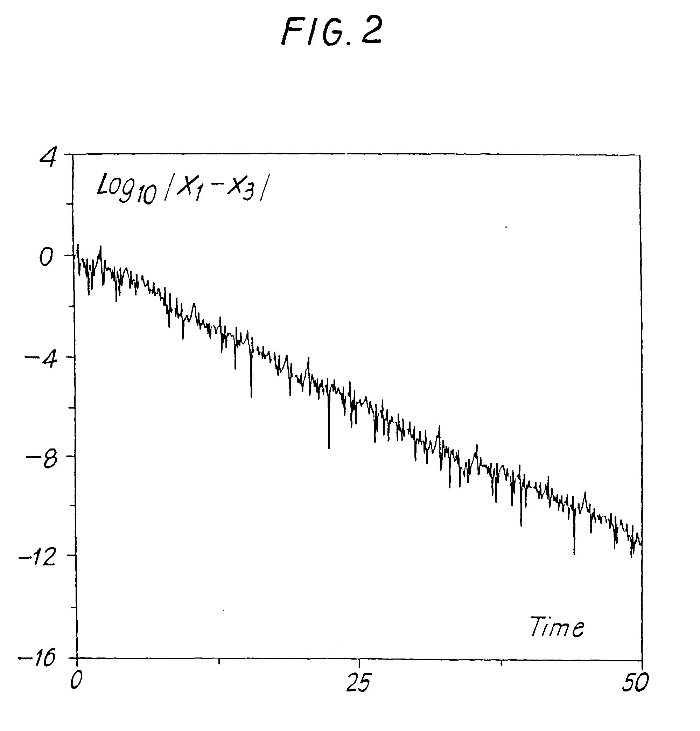

In order to demonstrate the effectiveness of the scheme described above, Fig. 2 shows along the ordinates on a logarithmic scale the pattern of the difference $\Delta x = |x_1 - x_3|$ with respect to the time. The abovementioned difference measures the synchronization between the transmitter 1 and the receiver 3 for the following values: $\sigma = 10$, b = 8/3 and r = 60. Similar results apply for the differences $|y_1 - y_3|$ and $|z_1 - z_3|$, which means that the systems $X_1$ and $X_3$ are overall synchronized with one another. Consequently a message coded in the variable $x_1$ may be received and decoded by the receiver 3. This means, in other words, that the system described is suitable for the transmission of coded data from a dynamic system arranged in the transmitter to a dynamic system arranged in the receiver and allows decoding of the data received.

Also when intercepting the signals U(t) and $y_3$ which are exchanged between transmitter and receiver, the person intercepting them is unable to decode the data and therefore read the messages transmitted.

In fact, it is not possible to obtain any information on the variable $x_1(t)$ from the signal U(t) and therefore the transmitted message cannot be reconstructed since:

1. the signal disappears as soon as the transmitter 1 and the receiver 3 reach synchronization with each other; and
2. the weight $K/(\tau_{n+1})$ is not decided a priori, but is continuously modified by the same system dynamics, such that the person intercepting this signal does not have access to any rules for decoding the signal.

Theoretically it is possible to imagine that information regarding the data transmitted from the transmitter 1 to the receiver 3 may be obtained from the signal $y_3$, that it may be intercepted, reconstructing from it the entire attractor corresponding to the system $\mathbf{X_3}$ and thus deciphering the coded message transmitted from 1 to 3, once the system $\mathbf{X_3}$ has been synchronized with the system $\mathbf{X_1}$. This eventuality may be avoided owing to the fact that the system has a double connection between transmitter and receiver.

In fact, after establishing a degree of accuracy θ with which transmission of the data or the message from the transmitter to the receiver is to be performed, each time this accuracy is reached (which may be verified by the transmitter 1 since it possesses, via the system $\mathbf{X_2}$, complete information on the dynamic state of the receiver 3), the receiver ceases to transmit the signal $y_3$ for a time interval $T_o$. In this time interval the two systems $\mathbf{X_2}$ and $\mathbf{X_3}$ evolve separately. Once the time To has lapsed, the receiver 3 starts again to transmit the variable $y_3$ to the transmitter 1. If the time To exceeds the system decorrelation time (inverse of the maximum Lyapunov exponent), the signal sent from the receiver 3 to the transmitter 1 consists of a set of non-correlated time sequences, so that the system $\mathbf{X_3}$ cannot be reconstructed from the parameter $y_3$ (if captured) and therefore the information transmitted from the transmitter to the receiver cannot be decoded.

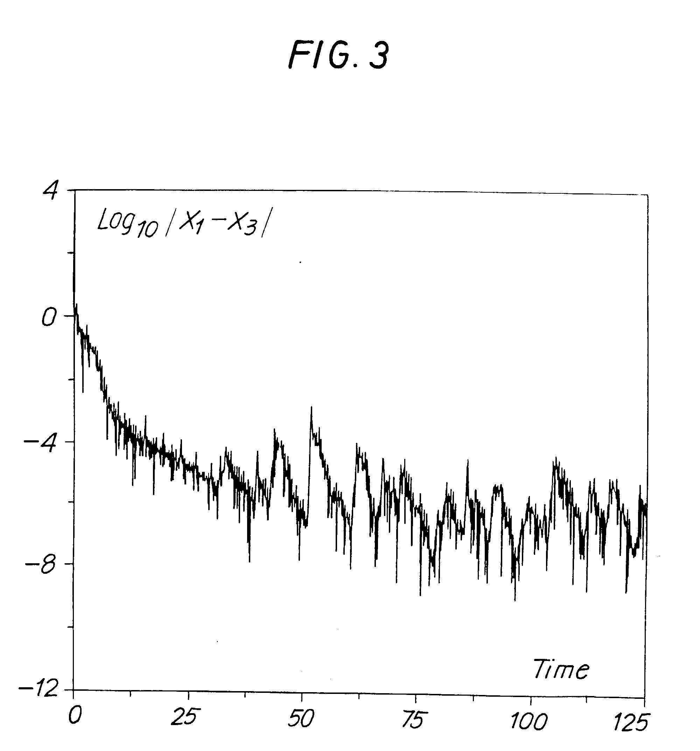

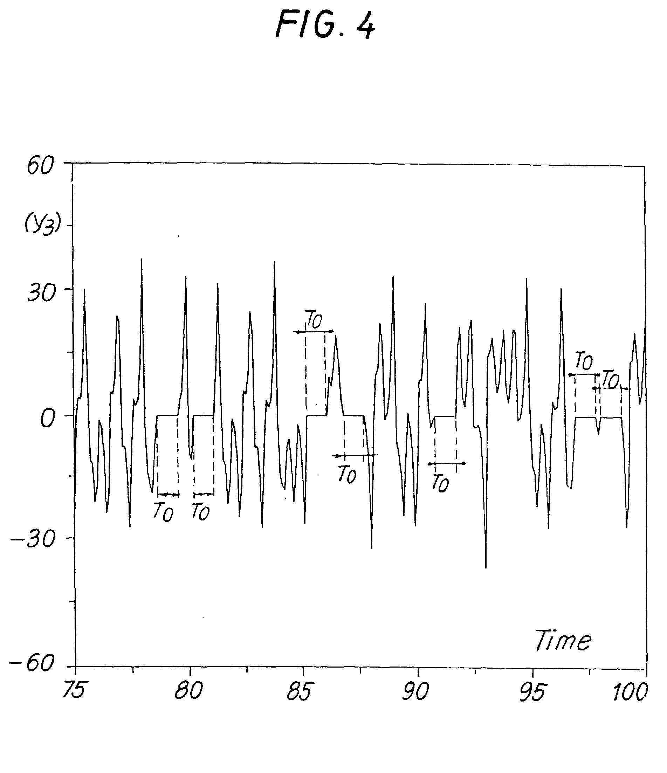

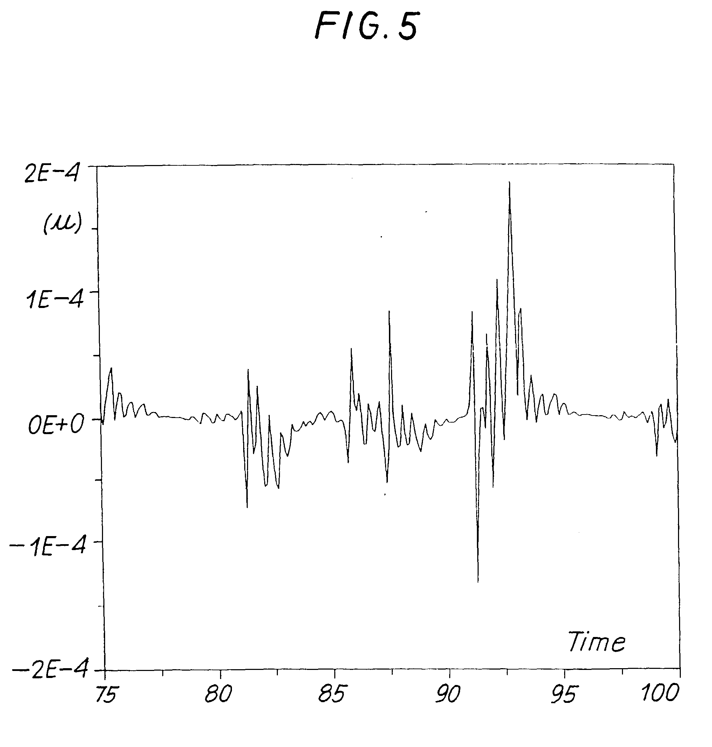

Fig. 3 shows the result which can be obtained with an interval $T_o=1$ and with an accuracy $\theta=10^{-5}$ (it should be noted that in the present case the maximum Lyapunov exponent is equal to about 1.41 and therefore To must be $>\approx 0.71$). The method of the present invention is able to maintain the accuracy imposed also in the case where the signal sent from the receiver 3 to the transmitter 1 is affected by sizeable "gaps", represented by the intervals To indicated in Fig. 4, which prevent any possible reconstruction of the dynamic state $\mathbf{X_3}(t)$. Finally, Fig. 5 shows the pattern of the control signal U(t) sent from the transmitter 1 to the receiver 3, which is restricted to a negligible value compared to the dynamics of the signal $x_1$, the latter varying from -28 to +28.

In the above description the transmission method and the transmitting and receiving systems have been described in mathematical terms. It is obvious, however, to persons skilled in the art that this mathematical representation may be implemented in a suitable electronic form, by providing circuits which satisfy the above-defined equations of the Lorenz system (Formula 3) or another suitable dynamic system, such as for example a Rössler system. In the aforementioned literature examples have been given of electronic implementations of the Lorenz and Rössler systems which may be used in order to implement the present invention. In particular, in K.M. Cuomo, A.V. Oppenheim, "Circuit Implementation of Synchronized Chaos with Applications to Communications", (loc. cit.), an electronic circuit which forms a dynamic Lorenz system is described, while in S. Hayes, C. Grebogi, E. Ott, A. Mark "Experimental Control of Chaos for Communication" (loc. cit.) a simple circuit which forms a Rössler system is described. A description of the possible circuits which implement the dynamic systems which can be used to realize the present invention is therefore superfluous here.

It is understood that the description above is given only by way of a practical demonstration of the invention, it being possible for the forms and arrangements of said invention to vary, without thereby departing from the scope of the idea which underlies the invention itself. For example, systems different from Lorenz and Rössler systems, with equivalent characteristics for the purposes of the method of the present invention, may be used.

The presence of any reference numbers in the accompanying claims is intended to facilitate reading of the claims with reference to the description and the drawing and does not limit the protective scope represented by the claims.

## Claims

1. A method for the transmission of information from a transmitter (1) to a receiver (3), in which the transmitter and the receiver each comprise a dynamic system $[\mathbf{X_1}=\mathbf{f}(\mathbf{X_1},\mu); \mathbf{X_3}=\mathbf{f}(\mathbf{X_3},\mu)]$, said two systems being able to be synchronized with each other; a signal ($y_3$) relating to one of the variables of one of said systems is exchanged between said two systems; and the information to be transmitted is coded in the form of a disturbance in one of the variables of the system of the transmitter;

characterized in that

- the transmitter comprises a first and a second dynamic system [$\dot{\mathbf{X}}_1 = \mathbf{f}(\mathbf{X}_1, \mu); \dot{\mathbf{X}}_2 = \mathbf{f}(\mathbf{X}_2, \mu)$] described by identical equations;
- the receiver (3) transmits to the transmitter (1) a signal ($y_3$) relating to one of the variables of the dynamic system of the receiver, which signal replaces the corresponding variable ($y_2$) of the second dynamic system of the transmitter in order to synchronize the second dynamic system of the transmitter with the dynamic system of the receiver;
- the transmitter (1) sends to the receiver (3) a signal (U(t)) which is a function of the difference between two corresponding variables ($x_1(t)$, $x_2(t)$) of the first and the second dynamic system of the transmitter;
- the signal ($y_3$) which the receiver sends to the transmitter (1) is interrupted for interruption time intervals ($T_o$) greater than a decorrelation time of the dynamic systems of the transmitter and the receiver, during said interruption intervals the dynamic system of the receiver and the second dynamic system of the transmitter evolving separately with respect to one another.

2. Method according to Claim 1, characterized by defining a degree of accuracy ($\theta$) for transmission of the information from the transmitter to the receiver and by interrupting the transmission of the signal ($y_3$) from the receiver to the transmitter for said interruption time interval each time the transmission between the transmitter and the receiver reaches said degree of accuracy.

3. Method according to Claim 1 or 2, characterized in that: at observation time intervals ($\tau_n$) the transmitter (1) determines the difference ($\delta$) between the values of a variable ($x_1(t)$, $x_2(t)$) of the first and the second dynamic system; from said difference (6) the signal (U(t)) which the transmitter sends to the receiver is calculated; and said time intervals ($\tau_n$) are determined as a function of the dynamics of the first and the second systems of the transmitter.

4. Method according to Claim 3, characterized in that the time interval ($\tau_n$) between two successive observation instants ($t_n$, $t_{n+1}$) at which the transmitter determines the difference between the variables ($x_1(t)$, $x_2(t)$) of the first and the second dynamic system is calculated in an iterative manner as a function of the speed of variation in the difference between said variables ($x_1(t)$, $x_2(t)$).

5. Method according to Claim 4, characterized in that the time interval between said two successive observation instants ($t_n$, $t_{n+1}$) is determined with the following iterative algorithm:

$$\delta_{n+1} = x_2(t_{n+1}) - x_1(t_{n+1}) \tag{4}$$

$$\lambda_{n+1} = 1/\tau_n \{ \mathrm{Log} \left| (\delta_{n+1}/\delta_n) \right| \} \tag{5}$$

$$\tau_n + 1 = \tau_n [1 - \tanh(g\lambda_{n+1})] \tag{6}$$

where $x_1(t)$, $x_2(t)$ are the time variables of the first and the second system of the transmitter, and where g is a constant which is always positive and which represents the sensitivity of the algorithm and is limited so as to prevent $t_{n+1}$ assuming the value zero.

6. Method according to Claim 4 or 5, characterized in that the signal (U(t)) which the transmitter sends to the receiver at the instant (t) is defined by

$$U(t) = (K/\tau_{n+1}) [x_1(t) - x_2(t)] \tag{7}$$

in which K is a positive constant, $x_1(t)$, $x_2(t)$ are the variables of the first and the second system of the transmitter, t is the time, and $\tau_{n+1}$ is the time interval between two consecutive observation instants.

7. A device for the transmission of information between a transmitter (1) and a receiver (3), each of which comprises an electronic circuit which forms a dynamic system, the two systems being able to be synchronized with one another

characterized in that

- the transmitter comprises a first and a second circuit, which implement two respective dynamic systems described by identical equations $[\mathbf{X_1}=\mathbf{f}(X_1,\mu);\ \mathbf{X_2}=\mathbf{f}(\mathbf{X_2},\mu)]$;
- the receiver (3) transmits to the transmitter (1) a signal ($y_3$) relating to one of the variables of the dynamic system of the receiver, which signal replaces the corresponding variable ($y_2$) of the second dynamic system of the transmitter in order to synchronize the second dynamic system of the transmitter with the dynamic system of the receiver;
- the transmitter (1) sends to the receiver (3) a signal (U(t)) which is a function of the difference between two corresponding variables ($x_1(t)$, $x_2(t)$) of the first and the second dynamic system of the transmitter;
- the signal ($y_3$) which the receiver sends to the transmitter is interrupted for interruption time intervals ($T_o$) greater than a decorrelation time of the circuits of the transmitter and the receiver, during said interruption intervals the circuit of the receiver and the second circuit of the transmitter evolving separately with respect to one another.

8. Device according to Claim 7, characterized in that the transmission of the signal ($y_3$) from the receiver to the transmitter is interrupted for said interruption time interval each time the transmission between the transmitter and the receiver reaches a predetermined degree of accuracy ($\theta$).

9. Device according to Claim 7 or 8, characterized in that: at observation time intervals ($\tau_n$) the transmitter (1) determines the difference ($\delta$) between the values of a variable ($x_1(t)$, $x_2(t)$) of the first and the second circuit; from said difference ($\delta$) the signal (U(t)) which the transmitter sends to the receiver is calculated; and said time intervals ($\tau_n$) are determined as a function of the dynamics of the first and the second circuit of the transmitter.

10. Device according to Claim 9, characterized in that the time interval ($\tau_n$) between two successive observation instants ($t_n$, $t_{n+1}$) at which the transmitter determines the difference between the variables ($x_1(t)$, $x_2(t)$) of the first and the second circuit is calculated in an iterative manner as a function of the speed of variation in the difference between said variables ($x_1(t)$, $x_2(t)$).

11. Device according to Claim 10, characterized in that the time interval ($\tau_{n+1}$) between said two successive observation instants ($t_n$, $t_{n+1}$) is determined with the following iterative algorithm:

$$\delta_{n+1} = x_2(t_{n+1}) - x_1(t_{n+1}) \tag{4}$$

$$\lambda_{n+1} = 1/\tau_n\{\text{Log} \left| (\delta_{n+1}/\delta_n) \right| \} \tag{5}$$

$$\tau_n+1 = \tau_n[1\text{-tanh} (g\lambda_{n+1})] \tag{6}$$

where $x_1(t)$, $x_2(t)$ are the time variables of the first and the second circuit of the transmitter, and where g is a constant which is always positive and which represents the sensitivity of the algorithm and is limited so as to prevent $\tau_{n+1}$ assuming the value zero.

12. Device according to Claim 10 or 11, characterized in that the signal (U(t)) which the transmitter sends to the receiver at the instant (t) is defined by

$$U(t) = (K/\tau_{n+1}) [x_1(t)-x_2(t)] \tag{7}$$

in which K is a positive constant, $x_1(t)$, $x_2(t)$ are variables of the first and the second circuit of the transmitter, t is the time and $\tau_{n+1}$ is the time interval between two consecutive observation instants.

# FIG.1

$$\dot{x}_1 = \sigma(y_1 - x_1)$$

$$\dot{y}_1 = rx_1 - y_1 - x_1 z_1$$

$$\dot{z}_1 = -bz_1 + x_1 y_1$$

1A

1B

$$\dot{x}_2 = \sigma(y_3 - x_2)$$

$$\dot{y}_2 = rx_2 - y_2 - x_2 z_2$$

$$\dot{z}_2 = -bz_2 + x_2 y_3$$

$u$

3

$$\dot{x}_3 = \sigma(y_3 - x_3) + u$$

$$\dot{y}_3 = rx_3 - y_3 - x_3 z_3$$

$$\dot{z}_3 = -bz_3 + x_3 y_3$$

$y_3$

# FIG. 2

## FIG. 3

# FIG. 4

# FIG.5